(19) Europäisches Patentamt
European Patent Office
Office européen des brevets

(11) Veröffentlichungsnummer: **0 254 177**
**A2**

# (12) EUROPÄISCHE PATENTANMELDUNG

(21) Anmeldenummer: **87110107.7**

(22) Anmeldetag: **14.07.87**

(51) Int. Cl.[4]: **C08G 18/10**, C08G 18/12, C08G 18/32, C08G 18/76, C09D 3/72, C09J 3/16, C09K 3/10

(30) Priorität: **23.07.86 DE 3624924**

(43) Veröffentlichungstag der Anmeldung: **27.01.88 Patentblatt 88/04**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Merger, Franz, Dr.**
**Max-Slevogt-Strasse 25**
**D-6710 Frankenthal(DE)**
Erfinder: **Schleier, Gisbert, Dr.**
**Von-der-Tann-Strasse 20**
**D-6900 Heidelberg(DE)**
Erfinder: **Schlotterbeck, Dietrich, Dr.**
**Mannheimer Strasse 13 a**
**D-6703 Limburgerhof(DE)**

## (54) Feuchtigkeitshärtende, lagerstabile Einkomponenten-Polyurethansysteme und deren Verwendung.

(57) Gegenstand der Erfindung sind feuchtigkeitshärtende, lagerstabile Einkomponenten-Polyurethan-Systeme, die enthalten

A) ein Polyurethan-Prepolymer mit einem NCO-Gehalt von 1 bis 10 Gew.%, hergestellt durch Umsetzung von höhermolekularen Polyolen und aromatischen Polyisocyanaten

B) mindestens ein Polyaldimin mit der Formel

$R \leftarrow N{=}CH\text{-}C(R^1,R^2)\text{-}R^3)_n$ und/oder

$R \leftarrow N{=}CH\text{-}C(R^1,R^2)\text{-}CH_2\text{-}R^4)_n$ ,

in denen R einen mehrwertigen linearen, verzweigten oder cyclischen Kohlenwasserstoffrest, der gegebenenfalls durch Alkylen-, Sulfonyl-, Thio-und/oder Oxigruppen als Brückenglied unterbrochen ist oder einen mehrwertigen Polyoxyalkylenrest bedeutet,

C) gegebenenfalls eine aromatische und/oder aliphatische Carbonsäure oder Arylsulfonsäure sowie

D) gegebenenfalls Hilfsmittel und/oder Zusatzstoffe.

EP 0 254 177 A2

# Feuchtigkeitshärtende, lagerstabile Einkomponenten-Polyurethansysteme und deren Verwendung

Zweikomponenten-Polyurethan(PU)-Systeme werden in großem Maßstab als Beschichtungsmittel und für die Herstellung von elastischen Bodenbelägen, beispielsweise Sportplatzbelägen, verwendet. Nachteilig an diesen Systemen ist beispielsweise, daß die Formulierungen eine lange Topfzeit aufweisen sollen und gleichzeitig rasch abbinden müssen, wozu häufig quecksilberorganische Verbindungen als Katalysator eingesetzt werden. Außerdem ist eine Verarbeitung der Systeme bei Temperaturen unterhalb 10°C im allgemeinen wegen ihrer schlechten Durchhärtung nicht möglich. Da durch die Reaktion der Polyisocyanatkomponente mit Wasser Kohlendioxid gebildet wird und eine Blasenbildung eintreten kann, können Zweikomponenten-PU-Systeme nur bei trockener Witterung im Freien verarbeitet werden. Nachteilig an diesem Verfahren ist ferner, daß zum Teil unter schwierigen Bedingungen auf Baustellen mit komplizierten, teuren Aggregaten gearbeitet werden muß und daher die Verarbeitungssicherheit unzureichend sein kann.

Zur Vermeidung dieser Nachteile können feuchtigkeitshärtende Einkomponenten-PU-Systeme verwendet werden, die als wesentliche Aufbaukomponente Isocyanatprepolymere enthalten. Zur Herstellung elastischer Schichtstoffe werden nach Angaben der DE-A-24 47 625 (US 4 025 579) als Bindemittel für Gummi- und/oder elastische Kunststoffgranulate Isocyanatprepolymere auf der Grundlage von hydroxylgruppenhaltigen Polyethern und Polyisocyanaten mit einem Gehalt an 2,4'-Diphenylmethan-diisocyanat von 20 bis 80 Gew.% verwendet. Die mechanischen Eigenschaften, insbesondere die Reißfestigkeit, derartiger Schichtstoffe sind jedoch für viele Anwendungsbereiche unzureichend. Zur Verbesserung der mechanischen Eigenschaften werden gemäß DE-A-33 08 418 (US 4 481 345) Formulierungen aus organischen Polyisocyanaten und Polyaminen mit zumindest teilweise blockierten, als Ketimine vorliegenden Aminogruppen beschrieben. Die Topfzeit dieser Beschichtungs-oder Dichtungsmassen ist aber mit maximal 17 Tagen angegeben, so daß die Produkte nicht als lagerstabile Einkomponenten-PU-Systeme bezeichnet werden können.

Nach einer anderen Methode werden hydrolyseempfindliche Heterocyclen als verkappte Kettenverlängerungsmittel in Einkomponenten-PU-Systeme eingesetzt. Mit Wasser härtbare Gemische auf Basis von Oxazolidinen und organischen Polyisocyanaten sind beispielsweise aus der DE-A-20 18 233 (US 3 743 626) bekannt. Die Lagerzeit derartiger Systeme auf Basis reaktiver aromatischer Polyisocyanate ist jedoch auch bei Ausschluß von Feuchtigkeit sehr kurz, während Systeme auf der Grundlage aliphatischer Polyisocyanate in Gegenwart von Feuchtigkeit zu langsam aushärten. Zur Vermeidung dieser Nachteile werden nach Angaben der DE-A-26 32 513 (US 4 118 376) anstelle der organischen Polyisocyanate Isocyanatgruppen aufweisende Prepolymere aus organischen Polyisocyanaten und Dispersionen von Polymerisaten, Polykondensation oder Polyadditionsprodukten in Polyhydroxylverbindungen eingesetzt. Nachteilig an diesen Systemen sind die relativ niedrigen mechanischen Festigkeiten der erhaltenen Endprodukte. Da aufgrund der chemischen Struktur des Kettenverlängerungsmittels keine Hartphasenaggregation oder -kristallisation möglich ist, besitzen die in der DE-A-26 32 513 beschriebenen Elastomeren einen Spannungsmodul von nur 0,2 $N/mm^2$ bei 100 % Dehnung.

Feuchtigkeitshärtende Einkomponenten-PU-Systeme, die Prepolymere mit einem NCO-Gehalt von 1 bis 5 Gew.% auf Basis von aliphatischen und/oder cycloaliphatischen Polyisocyanaten und Dialdimine, hergestellt durch Umsetzung von aliphatischen, cycloaliphatischen und/oder aromatischen Diaminen mit 3-(Isopropyl-carbonyloxy)-2,2-dimethyl-propanal, enthalten und eine Lagerstabilität von mehr als einem Jahr besitzen, werden in der DE-A-33 06 373 (US 4 469 831) beschrieben. Aber auch diese Produkte erfüllten hinsichtlich der mechanischen Eigenschaften der ausgehärteten PU-Elastomeren und der Durchhärtungszeit nicht sämtliche Erwartungen, wobei sich eine vereinzelt auftretende Geruchsbelästigung zusätzlich negativ bemerkbar machte.

Feuchtigkeitshärtende, lagerstabile Einkomponenten-Polyurethan-Systeme, die ein Polyurethan-Prepolymer mit einem NCO-Gehalt von 1 bis 10 Gew.%, hergestellt durch Umsetzung von höhermolekularen Polyolen und aromatischen Polyisocyanaten und Polyaldimine auf der Grundlage von Arylenresten enthalten, sind Gegenstand der DE-A-36 07 996.

Die Aufgabe der vorliegenden Erfindung bestand darin, die Nachteile bekannter Einkomponenten-PU-Systeme zumindest teilweise zu beseitigen, die Verarbeitung zu vereinfachen, die Durchhärtungszeit zu verkürzen, die mechanischen Eigenschaften der erhaltenen Endprodukte zu verbessern und dadurch möglichst neue Anwendungsbereiche zu erschließen.

Überraschenderweise zeigte sich, daß durch Substitution der aliphatischen Polyisocyanate durch die reaktiveren aromatischen Polyisocyanate zur Herstellung der Polyurethan-Prepolymeren einerseits die Lagerbeständigkeit der Einkomponenten-PU-Systeme nicht nachteilig beeinflußt wird und andererseits die Durchhärtung und die mechanischen Eigenschaften daraus hergestellter Polyurethane wesentlich verbessert werden. Durch die Verwendung von nicht aromatischen Polyaminen zur Polyaldiminbildung wird deren

Herstellung vereinfacht, da das Reaktionswasser nicht ausgekreist werden muß, sondern sich vorwiegend direkt abscheidet. Außerdem wird das Spektrum der mechanischen Eigenschaften der Endprodukte erweitert und dadurch neue Anwendungen erschlossen. Da als Blockierungsmittel zur Polyaldiminherstellung Verbindungen verwendet werden, die in α-Stellung zur Carbonylgruppe keine reaktiven Wasserstoffatome aufweisen, sind direkte Reaktionen zwischen Polyaldiminen und Polyisocyanaten, wie sie beispielsweise in Journal of Organic Chemistry 33, (1968), 2357-2361 von J.P. Chupp und E.R. Weiss beschrieben werden, nicht möglich, so daß lagerstabile Gemische aus Polyaldiminen und organischen Polyisocyanaten resultieren.

Gegenstand der Erfindung sind somit feuchtigkeitshärtende, lagerstabile Einkomponenten-PU-Systeme, die enthalten

A) ein Polyurethan-Prepolymer mit einem NCO-Gehalt von 1 bis 10 Gew.%, vorzugsweise 2,5 bis 6 Gew.%, bezogen auf das Gesamtgewicht des NCO-gruppenhaltigen Prepolymeren, hergestellt durch Umsetzung von höhermolekularen Polyolen und aromatischen Polyisocyanaten,

B) ein Polyaldimin oder eine Polyaldiminmischung aus Verbindungen mit der Struktur

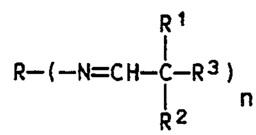

und/oder

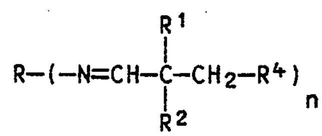

in denen bedeuten:

R einen verzweigten oder vorzugsweise linearen, mehrwertigen, vorzugsweise 2 bis 3wertigen, insbesondere zweiwertigen Kohlenwasserstoffrest mit 2 bis 16, vorzugsweise 2 bis 12 und insbesondere 4 bis 6 Kohlenstoffatomen, der gegebenenfalls gegenüber NCO-Gruppen inerte Substituenten, wie z.B. niedermolekulare Alkoxireste und/oder Halogenatome, wie Chlor-, Brom-und/oder Fluoratome, gebunden besitzen kann, einen verzweigten oder vorzugsweise linearen, mehrwertigen, vorzugsweise 2-bis 3-wertigen, insbesondere zweiwertigen Oxigruppen als Brückenglieder gebunden enthaltenden Kohlenwasserstoffrest mit 4 bis 16, vorzugsweise 4 bis 12 und insbesondere 4 bis 9 Kohlenstoffatomen,

der gegebenenfalls gegenüber NCO-Gruppen inerte Substituenten der oben beispielsweise genannten Art besitzen kann,

einen Cycloalkylenrest mit 6 bis 20, vorzugsweise 6 bis 15 Kohlenstoffatomen, der gegebenenfalls Alkylengruppen mit 1 bis 3 C-Atomen, vorzugsweise eine Methylengruppe, eine Sulfonyl-, Thio-und/oder Oxigruppe als Brückenglieder und/oder gegenüber NCO-Gruppen inerte Substituenten, wie z.B. Alkylgruppen mit 1 bis 6 Kohlenstoffatomen, vorzugsweise Methyl-, Ethyl-, n-Propyl-und iso-Propylgruppen, Alkoxigruppen mit 1 bis 6, vorzugsweise 1 bis 3 Kohlenstoffatomen, vorzugsweise Methoxi-, Ethoxi-, n-Propoxi-und/oder iso-Propoxigruppen,

und/oder Halogenatome, wie Chlor, Brom-und/oder Fluoratome, gebunden besitzen kann, oder

einen mehrwertigen, vorzugsweise 2-bis 8-wertigen, insbesondere 2-bis 3-wertigen Polyoxyalkylenrest mit den Strukturformeln

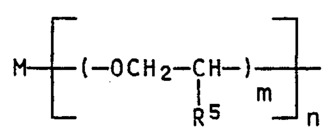

und/oder

$-CH_2-CH_2-CH_2-CH_2-(-O-CH_2-CH_2-CH_2-CH_2-)_{\overline{m}}$,

in denen M ein mehrwertiger, hydroxylgruppenfreie Rest eines Startermoleküls der Alkylenoxidpolyaddition, $R^5$ eine Ethylgruppe, vorzugsweise eine Methylgruppe und/oder ein Wasserstoffatom und m eine ganze Zahl von 1 bis 25, vorzugsweise 1 bis 6 sind,

$R^1$ und $R^2$ gleiche oder verschiedene, verzweigte oder vorzugsweise lineare Alkylgruppen mit 1 bis 6 Kohlenstoffatomen, vorzugsweise eine Methylgruppe, oder eine Cycloalkylgruppe, z.B. einen Cyclohexylrest,

$R^3$ einen $-OR^6$-, $-\overset{O}{\overset{\|}{C}}-OR^6$-oder $-O-\overset{O}{\overset{\|}{C}}-R^7$-Rest,
wobei $R^6$ eine verzweigte oder vorzugsweise lineare Alkylgruppe mit 1 bis 10, vorzugsweise 1 bis 4 Kohlenstoffatomen oder eine Cycloalkylgruppe, vorzugsweise Cyclohexylgruppe bedeutet und $R^7$ gleich $R^6$ ist oder einen verzweigten oder vorzugsweise linearen Oxaalkylrest mit 1 bis 10, vorzugsweise 1 bis 4 Kohlenstoffatomen bedeutet,

$R^4$ gleich $R^3$ oder $R^7$, ein Wasserstoffatom oder den Rest

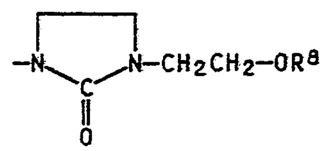

wobei $R^8$ gleich $R^6$,

$$-\overset{O}{\overset{\|}{C}}-NH-R^6,\ -\overset{O}{\overset{\|}{C}}-R^6,\ -\overset{O}{\overset{\|}{C}}-NH-R^9 \text{ oder } -\overset{O}{\overset{\|}{C}}-R^9$$

und $R^9$ ein aromatischer Rest mit 6 bis 15 Kohlenstoffatomen, vorzugsweise ein Phenylrest, der gegebenenfalls gegenüber NCO-Gruppen inerte Substituenten, beispielsweise der vorgenannten Art, gebunden besitzen kann, sind und

n eine ganze Zahl von 2 bis 8, vorzugsweise 2 bis 3 und insbesondere 2 und

C) gegebenenfalls eine aromatische und/oder aliphatische Carbonsäure oder Arylsulfonsäure, vorzugsweise Toluolsulfonsäure sowie

D) gegebenenfalls Hilfsmittel und/oder Zusatzstoffe.

Die erfindungsgemäßen Einkomponenten-Polyurethansysteme gestatten ein lösungsmittelfreies Herstellen von korrosionshemmenden Polyurethan-Beschichtungen durch Sprühauftrag mit Hilfe von Einkomponenten-Dosieraggregaten auf großen Metallflächen sowie die Beschichtung von Kunststoffen, Gestein, Estrich oder Beton mit elastischen Polyurethanen. Außerdem können Formkörper hergestellt werden, beispielsweise durch Eingießen des Einkomponenten-Polyurethansystems in ein Formwerkzeug und Aushärtenlassen in Gegenwart von Luftfeuchtigkeit oder durch Mischen des Einkomponenten-Polyurethansystems mit Wasser und Einbringen der Mischung in das Formwerkzeug.

Zur Herstellung der erfindungsgemäßen lagerstabilen, feuchtigkeitshärtenden Einkomponenten-Polyurethansysteme eignen sich die folgenden Ausgangskomponenten:

A) Bei den Polyurethan-Prepolymeren mit NCO-Gehalten von 1 bis 10 Gew.%, vorzugsweise 2,5 bis 6 Gew.%, handelt es sich um Umsetzungsprodukte von überschüssigen Mengen an aromatischen Polyisocyanaten mit höhermolekularen Polyolen. Die Prepolymeren können gegebenenfalls untergeordnete Mengen, beispielsweise 0 bis 5 Gew.%, monomere aromatische Polyisocyanate enthalten.

Als aromatische Polyisocyanate können beispielsweise verwendet werden: 1,5-Diisocyanato-naphthalin, Diisocyanato-benzole, 2,4-und 2,6-Diisocyanato-toluol und die entsprechenden Isomerengemische, 4,4'-, 2,4'-und 2,2'-Diphenylmethan-diisocyanat und die entsprechenden Isomerengemische, Polyphenyl-polymethylen-polyisocyanate, Mischungen aus Diphenylmethan-diisocyanaten und Polyphenyl-polymethylen-polyisocyanaten und/oder Diisocyanato-toluol-Isomeren. Die genannten Di-und Polyisocyanate können einzeln oder in Form von Mischungen eingesetzt werden. Vorzugsweise Anwendung finden 4,4'-Diphenylmethan-diisocyanat oder eine Mischung aus mindestens 50 Gew.% 4,4'-Diphenylmethan-diisocyanat, 0 bis 50 Gew.%, vorzugsweise 0 bis 10 Gew.% 2,4'-Diphenylmethan-diisocyanat und/oder 0 bis 30 Gew.%, vorzugsweise 0 bis 10 Gew.% Polyphenyl-polymethylen-polyisocyanat, wobei die Summe der Komponenten 100 Gew.% ergibt und die Gew.% bezogen sind auf das Gesamtgewicht der Mischung.

Als Reaktionspartner für die aromatischen Polyisocyanate zur Herstellung der Polyurethan-Prepolymeren kommen Polyole, zweckmäßigerweise solche mit einer Funktionalität von 2 bis 3, vorzugsweise von 2 und einem Molekulargewicht von 500 bis 8000, vorzugsweise von 1000 bis 6000 in Betracht. Bewährt haben sich z.B. Polyether-polyole, Polyester-polyole, Polythioether-polyole, Polyesteramide, hydroxylgruppenhaltige Polyacetale, hydroxylgruppenhaltige aliphatische Polycarbonate und hydroxylgruppenhaltige Polybutadien-telechele oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar-und Adipinsäure in Mengenverhältnissen von beispielsweise 20-35:35-50:20-32 Gew.-Teilen, und insbesondere Adipinsäure. Beispiele für mehrwertige Alkohole, insbesondere Diole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-De candiol, Glycerin und Trimethylolpropan. Vorzugsweise verwendet werden Ethandiol, Diethylenglykol, 1,4-Butandiol, 1,5-Pentandiol, 1,6-Hexandiol und Polyoxytetramethylen-glykole mit Molekulargewichten von 300 bis 800 oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\epsilon$-Caprolacton, oder Hydroxycarbonsäuren, z.B. $\omega$-Hydroxycarbonsäure. Polyoxytetramethylenglykol-polyadipate haben sich insbesondere zur Herstellung von PU-Elastomeren mit besonders hohen Weiterreißfestigkeitswerten bewährt.

Die Polyester-polyole besitzen vorzugsweise eine Funktionalität von 2 und ein Molekulargewicht von 500 bis 3000 und vorzugsweise 1000 bis 2500.

Insbesondere als Polyole verwendet werden jedoch Polyether-polyole, die nach bekannten Verfahren, beispielsweise durch anionische Polymerisation mit Alkalihydroxiden, wie Natrium-oder Kaliumhydroxid, oder Alkalialkoholaten, wie Natriummethylat, Natrium-oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 3, vorzugsweise 2 reaktive Wasserstoffatome gebunden enthält, hergestellt werden.

Geeignete Alkylenoxide sind beispielsweise Tetrahydrofuran, 1,3-Propylenoxid, 1,2-bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, Adipinsäure, Phthalsäure und Terephthalsäure, Alkanolamine, wie Ethanolamin, Diethanolamin und Triethanolamin und Ammoniak. Vorzugsweise verwendet werden zwei-und/oder dreiwertige Alkohole, wie Ethandiol, Propandiol-1,2 und -1,3, Diethylenglykol, Dipropylenglykol, Butandiol-1,4, Hexandiol-1,6, Glycerin und Trimethylolpropan.

Die Polyether-polyole besitzen vorzugsweise eine Funktionalität von 2 und Molekulargewichte von 500 bis 8000, vorzugsweise 1000 bis 6000 und insbesondere 1800 bis 4000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Zur Herstellung der Polyurethan-Prepolymeren werden das Polyol oder die Polyolmischung, vorzugsweise die di-und/oder trifunktionellen Polyester-und/oder Polyether-polyole mit Molekulargewichten von 500 bis 8000, vorzugsweise in Abwesenheit von niedermolekularen Kettenverlängerungs-oder Vernetzungsmitteln, mit dem überschüssigen aromatischen Polyisocyanat oder der Polyisocyanatmischung in an sich bekannter Weise in solchen Mengenverhältnissen zur Reaktion gebracht, daß die erhaltenen Polyurethan-Prepolymeren die obengenannten NCO-Gehalte besitzen. Unter Polyurethan-Prepolymeren sind hierbei, wie bereits dargelegt wurde, sowohl monomerenfreie Isocyanatgruppen aufweisende Prepolymere als auch deren Gemische mit untergeordneten Mengen an überschüssigen monomeren aromatischen Polyisocyanaten zu verstehen.

Zur Verminderung des Viskositätsanstiegs können den Polyurethan-Prepolymeren bzw. den erfindungsgemäßen Einkomponentensysteme Malonsäurediethylester, beispielsweise in einer Menge von 0 bis 10 Gew.%, vorzugsweise von 1 bis 4 Gew.%, bezogen auf das Gewicht des Polyurethan-Prepolymeren (A) als Zusatzstoff einverleibt werden.

B) Als Polyaldimine kommen Verbindungen mit der Strukturformel

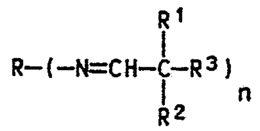

und/oder

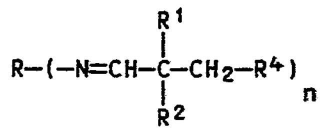

in Betracht, in der R, $R^1$, $R^2$, $R^3$, $R^4$ und n die obengenannte Bedeutung besitzen. Die Polyaldimine können einzeln oder als Mischungen eingesetzt werden.

Zur Herstellung der Polyaldimine werden die primären linearen, verzweigten oder cyclischen Polyamine, deren Kohlenwasserstoffreste gegebenenfalls durch Alkylen-, Sulfonyl-, Thio-und/oder Oxigruppen als Brückenglied unterbrochen sind oder Polyoxyalkylen-polyamine, vorzugsweise die primären Di-und/oder Triamine, mit einem Überschuß eines Aldehyds der Formel

$OCH\text{-}C(R^1,R^2)\text{-}R^3$ und/oder $OCH\text{-}C(R^1,R^2)\text{-}CH_2\text{-}R^4$,

in denen $R^1$, $R^2$, $R^3$ und $R^4$ die vorgenannte Bedeutung besitzen, vorzugsweise in einem $-NH_2$/-CHO-Verhältnis von 1:1 bis 5, insbesondere von 1:1,1 bis 4 gemischt und zweckmäßigerweise nach Zusatz eines geeigneten Lösungsmittels, wie z.B. Toluol, Xylol, Benzol, Methylenchlorid, Dichlorethan, Cyclohexan oder Heptan, so lange in Gegenwart eines unter den Reaktionsbedingungen inerten Gases am Wasserabscheider erhitzt, bis die theoretisch zu erwartende Wassermenge abgetrennt ist. Üblicherweise sind hierzu Reaktionszeiten von 1 bis 10 Stunden erforderlich.

Eine Reinigung der Polyaldimine, beispielsweise durch Destillation, ist nicht unbedingt notwendig. Die Produkte können nach Abdestillieren des überschüssigen Aldehyds und, falls in Gegenwart eines Lösungsmittels kondensiert wurde, des vorzugsweise eingesetzten Lösungsmittels direkt zur Herstellung der Einkomponenten-PU-Systeme verwendet werden.

Zur Herstellung der Polyaldimine seien beispielhaft genannt: gegebenenfalls substituierte verzweigte oder vorzugsweise lineare Polyamine, vorzugsweise Diamine, mit 2 bis 16, vorzugsweise 2 bis 12 und insbesondere 4 bis 6 Kohlenstoffatomen wie z.B. Ethylen-, 1,2-bzw. 1,3-Propylen-, 2,2-Dimethyl-propylen-, 1,3-bzw. 1,4-Butylen-, 1,5-Pentamethylen-, 1,4-bzw. 1,6-Hexamethylen-, 2,2,4-Trimethyl-hexamethylen-, 1,7-Heptamethylen-, 1,8-Octamethylen-, 1,10-Decamethylen-und 1,12-Dodecamethylen-diamin sowie 2-Methoxi-1,5-pentamethylen-diamin und 3,4-Dichlor-1,6-hexamethylen-diamin,
gegebenenfalls substituierte, verzweigte oder vorzugsweise lineare Polyamine, vorzugsweise Diamine, mit 4 bis 16, vorzugsweise 4 bis 12 und insbesondere 4 bis 9 Kohlenstoffatomen, die als Brückenglieder

Oxigruppen gebunden enthalten, wie z.B. Di-(2-aminoethyl)-ether, Di-(4-aminobutyl)-ether, 4,7-Dioxa-1,10-diaminodecan, 4,9-Dioxa-1,12-diaminododecan sowie 6,6-Dimethyl-4,8-dioxa-1,11-diamino-undecan, und gegebenenfalls substituierte cycloaliphatische Diamine mit 6 bis 20, vorzugsweise 6 bis 15 Kohlenstoffatomen, die gegebenenfalls als Brückenglieder Alkylen-, Sulfonyl-, Thio-und/oder Oxigruppen gebunden enthalten wie z.B. 1,2-, 1,3-und 1,4-Diaminocyclohexan und die entsprechenden Isomerengemische, 3-Aminomethyl-3,5,5-trimethylcyclohexylamin (IPDA), 2,4-und 2,6-Hexahydrotoluylen-diamin sowie beliebige Gemische dieser Isomeren, 2,2', 2,4'-, 4,4'-Diamino-dicyclohexyl, 3,3'-Dimethyl-4,4'-diamino-dicyclohexylmethan, 2,2'-, 2,4'-und 4,4'-Diaminodicyclohexyl-methan, -propan-2,2, -ether, -sulfid und -sulfon, Dialkyldiamino-dicyclohexyl-methane, -propane, -ether, -sulfide und -sulfone sowie die entsprechenden Isomerengemische der einzelnen Verbindungsklassen.

Bewährt haben sich ferner di-bis octafunktionelle, vorzugsweise di-und/oder trifunktionelle Polyoxyalkylen-polyamine, wie z.B. Polyoxyethylen-polyamine, Polyoxypropylen-polyamine, Polyoxyethylen-polyoxypropylen-polyamine und/oder Polyoxytetramethylen-diamine, mit Molekulargewichten von 110 bis 5000, vorzugsweise von 200 bis 500, die hergestellt werden können nach bekannten Verfahren aus Polyether-polyolen mit einer Funktionalität von 2 bis 8, die ihrerseits erhalten werden nach der oben beschriebenen Methode durch Oxalkylierung von vorzugsweise mehrwertigen Alkoholen wie z.B. Ethandiol, Diethylenglykol, 1,3-bzw. 1,2-Propandiol, Dipropylenglykol, 1,4-Butandiol, 1,5-Pentandiol, 1,6-Hexandiol, Glycerin, Trimethylolethan, Trimethylolpropan, Pentaerythrit, Sorbit und/oder Sucrose, oder durch kationische Polymerisation von Tetrahydrofuran. Als Polyoxyalkylenpolyamin-Herstellungsverfahren seien beispielhaft genannt die Cyanoalkylierung von Polyether-polyolen und anschließende Hydrierung des gebildeten Nitrils (US 3 267 050) oder die Aminierung von Polyether-polyolen mit Ammoniak in Gegenwart von Wasserstoff und Katalysatoren (DE 12 15 373).

Zur Herstellung der Polyaldimine vorzugsweise verwendet werden lineare oder verzweigte Alkylendiamine mit 4 bis 6 Kohlenstoffatomen, insbesondere 1,4-Butylendiamin und/oder 1,6-Hexamethylen-diamin, gegebenenfalls alkylsubstituierte Cycloalkylendiamine aus der Gruppe der Diaminocyclohexane, 3-Aminomethyl-3,5,5-trimethylcyclohexylamin, Hexahydrotoluylen-diamine, Diamino-dicyclohexyle, Dialkyldicyclohexylmethane bzw. -propane mit 1 bis 4 Kohlenstoffatomen im Alkylrest, Diamino-dicyclohexylmethane, Diamino-dicyclohexylpropane und insbesondere 3,3'-Dimethyl-4,4'-diamino-dicyclohexylmethan oder di-und/oder trifunktionelle Polyoxyalkylen-polyamine mit Molekulargewichten von 110 bis 5000, insbesondere von 200 bis 500.

Als Aldehyde der Formeln $OCH-C(R^1,R^2)-R^3$ und/oder $OCH-C(R^1,R^2)-CH_2-R^4$, in denen $R^1$, $R^2$, $R^3$ und $R^4$ die vorgenannte Bedeutung haben, zur Herstellung der Polyaldimine kommen beispielsweise in Betracht: 2,2-Dimethylpropanal, 3-Methoxi-, 3-Ethoxi-, 3-Propoxi-, 3-Isopropoxi-, 3-n-Butoxi-und 2-Ethylhexoxi-2,2-dimethyl-propanal, 2-Formylisobuttersäurealkylester mit 1 bis 4 Kohlenstoffatomen im Alkylrest, z.B. 2-Formylisobuttersäuremethylester, 3-(Methyl-carbonyloxi)-und 3-(Isopropyl-carbonyloxy)-2,2-dimethylpropanal, (Methoxiacetoxi)-2,2-dimethyl-propanal und 2-Acetoxi-2-methyl-propanal. Geeignet sind ferner Aldehyde der Formel

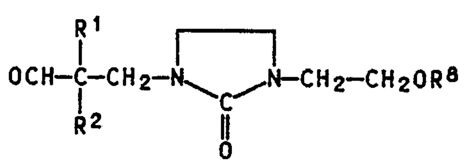

in der $R^1$, $R^2$ und $R^8$ die obengenannte Bedeutung besitzen und $R^1$ und $R^2$ insbesondere Methylgruppen sind, die aufgrund ihres hohen Molekulargewichts einen geringen Dampfdruck aufweisen und äußerst geruchsarme Einkomponenten-PU-Systeme ergeben. Als Aldehyde haben sich jedoch besonders bewährt und werden daher vorzugsweise eingesetzt: 2,2-Dimethyl-propanal oder 2-Formylisobuttersäurealkylester mit 1 bis 4 Kohlenstoffatomen im Alkylrest insbesondere der 2-Formylisobuttersäuremethylester.

C) Die erfindungsgemäß verwendbaren Polyaldimine hydrolysieren in Gegenwart von Feuchtigkeit. Die Hydrolysegeschwindigkeit kann durch den Zusatz von organischen Carbonsäuren, beispielsweise aliphatischen und vorzugsweise aromatischen Carbonsäuren oder Arylsulfonsäure beschleunigt werden. Beispielhaft genannt seien aliphatische Carbonsäuren, wie Ameisensäure, Essigsäure, Mono-, Di-und Trichloressigsäure, Oxalsäure, Malonsäure, Maleinsäure und Fumarsäure, aromatische Carbonsäuren, wie Benzoesäure, Mono-, Di-und Trichlorbenzoesäure, Salicylsäure und Alkylmonophthalate und Arylsulfonsäuren, wie z.B. Xylolsulfonsäure und vorzugsweise Toluolsulfonsäure oder deren Gemische. Vorzugsweise verwendet werden Benzoesäure und Mischungen aus Toluol-und Xylolsulfonsäure.

D) Den feuchtigkeitshärtenden, lagerstabilen Einkomponenten-Polyurethansystemen können ferner Hilfsmittel und/oder Zusatzstoffe wie z.B. Füllstoffe, Weichmacher, Pigmente, Ruße, Molekularsiebe, Thixotropiermittel, Lichtschutzmittel und Antioxidantien, beispielsweise Phenothiazine, sterisch gehinderte Phenole oder Diphenylaminderivate enthalten, ohne daß dadurch die vorteilhaften Eigenschaften wesentlich beeinträchtigt werden.

Erfindungsgemäßen Einkomponenten-PU-Systemen für Beschichtungen, die UV-Strahlung ausgesetzt sind, wird zweckmäßigerweise eine Stabilisatorkombination aus Antioxidantien und Lichtschutzmittel einverleibt. Insbesondere bewährt hat sich hierfür eine Kombination, die besteht aus 2-(2'-Hydroxy-5'-methylphenyl)-benzotriazol (®Tinuvin P der Firma Ciba-Geigy, Basel), Sebacinsäure-bis-(1,2,2,6,6-pentamethyl)-4-piperidylester (®Tinuvin 765 der Firma Ciba-Geigy, Basel) und Pentaerythrityl-tetrakis-[3-(3,5-di-tert.butyl-4'-hydroxiphenyl)-propionat] (®Irganox 1010 der Firma Ciba-Geigy, Basel).

Zur Herstellung der erfindungsgemäßen Einkomponenten Polyurethansysteme werden das Polyurethan-Prepolymer (A) und das Polyaldimin (B) bei Temperaturen von 0 bis 100°C, vorzugsweise von 20 bis 50°C unter Rühren in solchen Mengen gemischt, daß pro -NCO-Gruppe der Prepolymeren (A) 0,2 bis 1,3 Äquivalente, vorzugsweise 0,5 bis 0,9 Äquivalente -N=CH-Gruppen der Polyaldimine vorliegen. Vorteilhaft hat es sich erwiesen, wenn in dem Einkomponenten-Polyurethansystem ein geringer Überschuß an -NCO-Gruppen vorliegt.

Zu der erhaltenen Mischung fügt man anschließend bei Raumtemperatur pro Äquivalent -N=CH-Gruppe der Polyaldimine (B) 0 bis 20 mval, vorzugsweise 1 bis 5 mval einer aromatischen und/oder aliphatischen Carbonsäure oder Arylsulfonsäure.

Die erfindungsgemäßen feuchtigkeitshärtenden Einkomponenten-Polyurethansysteme sind unter Feuchtigkeitsausschluß mehr als 6 Monate lagerstabil. In Gegenwart von Feuchtigkeit erfolgt eine rasche Gelbildung und Durchhärtung. Die Produkte eignen sich vorzugsweise als Beschichtungsmassen z.B. für den Sportanlagenbau, Überzugs-, Dichtungs-, Verguß-, Spachtel-und Verklebungsmassen. Sie finden ferner Verwendung zur Herstellung von PU-Elastomeren, die zur Erzielung eines hohen E-Modul mit Fasern oder flächigen, textilen Fasergebilden verstärkt werden.

Das Fasergebilde kann als Matte, Vlies, Gewebe oder Filz vorliegen und aus synthetischen oder natürlichen Fasern, wie z.B. Glas-, Kohlenstoff-, aliphatischen und/oder aromatischen Polyamid-, Polyester- oder Baumwollfasern hergestellt werden.

Beispiele

Herstellung von NCO-Gruppen enthaltenden Prepolymeren

Beispiel 1

10,4 Gew.-Teile einer Mischung aus 2,4'-und 4,4'-Diphenylmethan-diisocyanat im Gewichtsverhältnis 50:50 wurden mit

34,5 Gew.-Teilen Polyoxypropylen-glykol der OH-Zahl 56,
34,5 Gew.-Teilen Polyoxypropylen-polyoxyethylen-glykol der OH-Zahl 29 und
14,1 Gew.-Teilen eines Polyoxyalkylen-triols der OH-Zahl 27, hergestellt durch Polyaddition von 1,2-Propylenoxid an Trimethylolpropan und anschließende Addition von Ethylenoxid an das erhaltene Trimethylolpropan-Propylenoxidaddukt

intensiv gemischt, und die Mischung wurde bei 80°C solange gerührt, bis der NCO-Gehalt 3,5 Gew.% betrug.

Der Reaktionsmischung wurde nun eine Suspension von 0,35 Gew.-Teilen ®Tinuvin P, 0,17 Gew.-Teilen ®Tinuvin 765 und 0,35 Gew.-Teilen ®Irganox 245 (der Ciba-Geigy, Basel) in 1,5 Gew.-Teilen Malonsäurediethylester einverleibt. Danach ließ man das Polyurethan-prepolymere auf Raumtemperatur abkühlen.

Beispiel 2

Polyurethan-prepolymer zur Herstellung eines Sportplatzbelages

Zu 16 Gew.-Teilen 4,4'-Diphenylmethan-diisocyanat wurde bei 80°C unter Rühren in einer Stickstoffatmosphäre innerhalb von 2 Stunden eine Mischung aus

13,4 Gew.-Teilen eines trifunktionellen Polyoxyalkylen-polyols mit einer OH-Zahl von 27, hergestellt durch Polyaddition von 1,2-Propylenoxid an Trimethylolpropan und anschließende Addition von Ethylenoxid an das erhaltene Trimethylolpropan-Propylenoxidaddukt,
32,8 Gew.-Teilen Polyoxypropylen-glykol der OH-Zahl 56,
32,8 Gew.-Teilen Polyoxypropylen-polyoxyethylen-glykol der OH-Zahl 29,
0,035 Gew.-Teilen Benzoylchlorid und
2,3 Gew.-Teilen Malonsäurediethylester

hinzugefügt und die Reaktionsmischung wurde bei 80°C solange gerührt, bis der NCO-Gehalt 3,1 bis 3,2 Gew.% erreichte.

Danach fügte man der Reaktionsmischung zur Stabilisierung eine Suspension von 0,3 Gew.-Teilen ®Tinuvin P, 0,165 Gew.-Teilen ®Tinuvin 765 und 0,3 Gew.-Teilen Irganox 1010 in 1,0 Gew.-Teilen Malonsäurediethylester hinzu und ließ das Polyurethan-prepolymere auf Raumtemperatur abkühlen.

Das erhaltene Produkt besaß danach eine Viskosität von 4000 bis 7000 mPa•s bei 25°C und einen NCO-Gehalt von 2,9 bis 3,1 Gew.%.

Beispiel 3

Polyurethan-prepolymer zur Herstellung einer Klebedichtungsmasse

Zu 6,0 Gew.-Teilen 4,4'-Diphenylmethan-diisocyanat wurde bei 80°C unter Rühren in einer trockenen Stickstoffatmosphäre innerhalb von 4 Stunden eine Mischung aus

7,64 Gew.-Teilen eines Polyoxypropylen-triols der OH-Zahl 42, hergestellt unter Verwendung von Glycerin als Startermolekül,
24,0 Gew.-Teilen Polyoxypropylen-glykol der OH-Zahl 56 und
0,0045 Gew.-Teilen Benzoylchlorid

hinzugefügt und danach bei 80°C ungefähr 20 Stunden gerührt bis die Reaktionsmischung eine Viskosität bei 80°C von ungefähr 70 Pa•s aufwies. Der Reaktionsmischung wurden nun 0,76 Gew.-Teile 4,4'-Diphenylmethan-diisocyanat und 1,00 Gew.-Teile Malonsäurediethylester einverleibt und bei 80°C gerührt bis der NCO-Gehalt 2,4 Gew.% betrug. Die Reaktionsmischung besaß eine Viskosität bei 25°C von 50 Pa•s.

Beispiele 4 bis 13

Herstellung von Polyaldiminen

1 Mol eines Polyamins wurde in 400 g Cyclohexan gelöst oder suspendiert und bei 25°C mit 1,1 Mol Aldehyd pro $NH_2$-Gruppe versetzt. Nach einer Reaktionszeit von 20 Stunden wurde die gebildete wäßrige Phase abgetrennt und die Hauptmenge des Cyclohexans unter Atmosphärendruck abdestilliert. Das restliche Cyclohexan und der überschüssige Aldehyd wurde danach mit Hilfe eines Dünnschichtverdampfers bei 150°C und 1 mbar abgetrennt. Das auf diese Weise erhaltene Polyaldimin wurde ohne weitere destillative Reinigung direkt zur Herstellung der Einkomponenten-PU-Systeme verwendet.

Zur Bestimmung des Aldimingehaltes wurde der erhaltene Rückstand in Essigsäure gelöst und durch Titration mit 0,1 n Perchlorsäure in Dioxan bestimmt. Zusätzlich wurden die Proben durch H-NMR-und IR-Spektren charakterisiert.

Herstellung der Einkomponenten-Polyurethan-Systeme

100 Gew.-Teile des nach Beispiel 2 hergestellten Polyurethan-Prepolymeren wurden unter Rühren bei Raumtemperatur mit einer solchen Menge Polyaldimin, hergestellt nach der oben beschriebenen Herstellungsvorschrift, gemischt, daß das Verhältnis von -NCO/-N=CH-Gruppen 1,2 betrug. Der Mischung wurde danach 1 Gew.-Teil einer 10 gew.%igen Lösung von Benzoesäure in Di-(3-oxapentyl)-phthalat zur Katalyse der Aldiminhydrolyse einverleibt und die eingeschlagene Luft unter vermindertem Druck abgetrennt.

Das Einkomponenten-PU-System wurde zur Prüfung in einer 3 mm dicken Schicht in ein offenes, eingetrenntes Formwerkzeug mit der Dimension 10×20×1 cm eingegossen und bei einer relativen Luftfeuchtigkeit von 40 bis 60 % aushärten gelassen. Nach 7tägiger Lagerung wurde die mechanische Festigkeit im Zugversuch nach DIN 53 504 gemessen.

Die Aufbaukomponenten zur Polyaldiminherstellung und die ermittelten mechanischen Festigkeitswerte sind in der folgenden Tabelle zusammengefaßt.

Zur Bestimmung der Lagerstabilität wurde die Viskosität der Einkomponenten-PU-Systeme bei 25°C gemessen. Das Einkomponenten-PU-System nach Beispiel 7 zeigte über einen Zeitraum von 6 Monaten einen Viskositätsanstieg um den Faktor 1,5 bis 2, das Beispiel 12 um den Faktor 1,3. Der Viskositätsanstieg war nur geringfügig höher als bei dem Polyurethan-Prepolymeren und beeinträchtigte die technische Verwertbarkeit nicht.

Vergleichsbeispiel

Herstellung des Dialdimin aus 3-(Isopropyl-carbonyloxi)-2,2-dimethyl-propanal und 1,6-Hexamethylen-diamin
378 Gew.-Teile 3-(Isopropyl-carbonyloxi)-2,2-dimethyl-propanal,
116 Gew.-Teile Hexamethylen-diamin und
70 Gew.-Teile Heptan

wurden bei Raumtemperatur gemischt, in Gegenwart von Stickstoff 1 Stunde bei 90°C kondensiert und danach in einem Wasserabscheider auf maximal 150°C erwärmt. Nach 3 Stunden waren 36 Gew.-Teile Wasser abgeschieden. Danach ließ man die Reaktionsmischung abkühlen und destillierte unter einem Druck von 10 mbar und maximal 150°C den überschüssigen Aldehyd und das Heptan ab.

Herstellung des Polyurethan-Prepolymeren

100 Gew.-Teile eines Polyoxypropylen-glykols mit einem Molekulargewicht von 2000 und
175 Gew.-Teile eines Polyether-polyols mit einem Molekulargewicht von 4900 auf Basis von Glycerin/1,2-Propylenoxid/Ethylenoxid

wurden mit

39 Gew.-Teilen 3-Isocyanatomethyl-3,5,5-trimethylcyclohexylisocyanat

bei 70°C 3 Stunden lang gerührt. Danach ließ man auf Raumtemperatur abkühlen. Man erhielt ein Prepolymeres mit einem NCO-Gehalt von 2 Gew.% und einer Viskosität von 24 Pa•s bei 25°C.

Herstellung des Einkomponenten-Polyurethan-Systems

100 Gew.-Teile des Polyurethan-Prepolymeren wurden unter Rühren bei Raumtemperatur mit einer solchen Menge Dialdimin gemischt, daß das Verhältnis von -NCO/-N=CH-Gruppen 1,2 betrug. Der Mischung wurde danach 1 Gew.-Teil einer 10 gew.%igen Lösung von Benzoesäure in Di-(3-oxapentyl)-phthalat einverleibt und das erhaltene Einkomponenten-PU-System analog den Angaben der Beispiele 4 bis 13 zu einem Prüfkörper verarbeitet, an welchem die in der folgenden Tabelle genannten mechanischen Festigkeitswerte gemessen wurden.

Tabelle

| Beispiel | Aldehyde | Polyamine | Aldimingehalt [mval/g] ber. | Aldimingehalt [mval/g] gef. | Prüfung des Formteils aus dem Einkomponenten-PU-System im Zugversuch n. DIN 53504: Reißfestigkeit [N/mm²] | Prüfung des Formteils aus dem Einkomponenten-PU-System im Zugversuch n. DIN 53504: Reißdehnung [%] |
|---|---|---|---|---|---|---|
| 4 | n-Butoxi-2,2-dimethyl-propanal | 1,6-Diamino-hexan | 5,04 | 5,00 | 8,0 | 600 |
| 5 | 2-Ethyl-hexanoyloxi-2,2-dimethyl-propanal | 1,6-Diamino-hexan | 3,73 | 3,56 | 2,5 | 150 |
| 6 | 2-Formylisobuttersäure-methylester | 1,6-Diamino-hexan | 5,88 | 5,82 | 9,0 | 500 |
| 7 | 2,2-Dimethyl-propanal | 1,6-Diamino-hexan | 7,94 | 7,90 | 9,0 | 630 |
| 8 | 2,2-Dimethyl-propanal | 1,4-Diamino-butan | 8,90 | 8,90 | 10,0 | 900 |
| 9 | 2,2-Dimethyl-propanal | 3,3'-Dimethyl-4,4'-diamino-dicyclohexylmethan | 5,34 | 5,29 | 19,0 | 580 |
| 10 | 2,2-Dimethyl-propanal | 1,12-Diamino-dodecan | 5,95 | 5,90 | 10,0 | 650 |
| 11 | 2,2-Dimethyl-propanal | 4,9-Dioxa-1,12-diamino-dodecan | 5,90 | 5,90 | 5,8 | 660 |
| 12 | 2,2-Dimethyl-propanal | Mischung aus 35 Gew.-Teilen 1,6-Diamino-hexan, 26 Gew.-Teilen Polyoxypropylen-triamin vom Molekulargewicht 440 (®Jeffamin T 403) und 39 Gew.-Teilen Polyoxypropylen-diamin vom Molekulargewicht 230 (®Jeffamin D 230) | 6,38 | 6,40 | 6,0 | 560 |
| 13 | 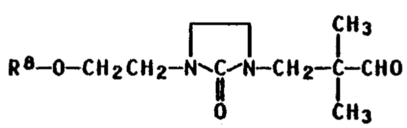 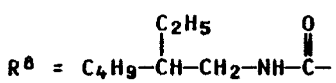 | 1,6-Diamino-hexan | 2,4 | 2,2 | 3,4 | 570 |
| Vgl. bsp. | Isobutyroxi-2,2-dimethyl-propanal | 1,6-Diamino-hexan | 4,72 | 4,55 | 1,3 | 3,34 |

Beispiel 14

Herstellung des Dialdimins aus 2,2-Dimethyl-propanal und 1,6-Diaminohexan nach einer anderen Herstellungsvariante

84 Gew.-Teile 92 gew.%iges 2,2-Dimethyl-propanal, das als Nebenprodukt 8 Gew.% tert.-Butanol enthielt, und 54 Gew.-Teile einer 85 gew.%igen wäßrigen 1,6-Diamino-hexanlösung wurden bei Raumtemperatur gemischt und anschließend 3 Stunden bei 60°C kondensiert. Nach dem Abkühlen der Reaktionsmischung auf 25°C wurde die wäßrige Phase abgetrennt und das überschüssige 2,2-Dimethyl-propanal und das tert.-Butanol unter einem Druck von 5 mbar und langsamen Erwärmen auf 120°C abdestilliert. Zur vollständigen Abtrennung der flüchtigen Bestandteile wurde die Reaktionsmischung noch 1 Stunde bei 120°C/5 mbar behandelt.

Beispiel 15

Herstellung eines NCO-gruppenhaltigen Prepolymeren

473 Gew.-Teile 4,4'-Diphenylmethan-diisocyanat und 1700 Gew.-Teile eines Polyoxytetramethylenglykol-polyadipats mit der Hydroxylzahl 56, hergestellt durch Polykondensation von Adipinsäure und einem Polyoxytetramethylen-glykol der Molmasse 250, wurden gemischt unter Rühren und danach 2,5 Stunden bei 80°C zur Reaktion gebracht. Das erhaltene Prepolymer besaß einen NCO-Gehalt von 4,2 Gew.%.

Herstellung des Einkomponenten-PU-Systems

Aus 100 Gew.-Teilen des oben beschriebenen Prepolymeren und dem Dialdimin hergestellt gemäß Beispiel 7 aus 2,2-Dimethyl-propanal und 1,6-Diaminohexan, wurde analog den Angaben der Beispiele 4 bis 13 ein Einkomponenten-PU-System und daraus ein Formkörper hergestellt. Das erhaltene Formteil besaß nach DIN 53 504 eine Reißfestigkeit von 25 $N/mm^2$ und eine Reißdehnung von 620 %.

Beispiel 16

Herstellung eines NCO-gruppenhaltigen Prepolymeren 470 Gew.-Teile 4,4'-Diphenylmethan-diisocyanat, 400 Gew.-Teile eines Polyoxypropylen-polyoxyethylen-triols mit einer OH-Zahl von 42, hergestellt durch Propoxilierung von Glycerin und anschließende Ethoxilierung des Glycerin-Propylenoxidaddukts und 1570 Gew.-Teile Polyoxytetramethylen-glykol mit der OH-Zahl von 56 wurden unter Rühren bei Raumtemperatur gemischt und danach 2 Stunden auf 80°C erwärmt. Das so hergestellte Prepolymere besaß einen NCO-Gehalt von 2,9 Gew.%.

Herstellung des Einkomponenten-PU-Systems

Aus 100 Gew.-Teilen des oben beschriebenen Prepolymeren und dem Dialdimin, hergestellt gemäß Beispiel 7, wurde analog den Angaben der Beispiele 4 bis 13 ein Einkomponenten-PU-System und daraus ein Formkörper hergestellt. Das erhaltene Formteil besaß nach DIN 53 504 eine Reißfestigkeit von 19,5 $N/mm^2$ und eine Reißdehnung von 640 %.

Beispiel 17

Man verfuhr analog den Angaben von Beispiel 7, verstärkte jedoch den Formkörper mit 1 Gew.%, bezogen auf das Gewicht des Einkomponenten-PU-Systems, eines ungeschlichteten Glasfaservlieses mit dem Flächengewicht von 50 $g/m^2$.

Das erhaltene Formteil besaß einen E-Modul von 65 $N/mm^2$, ermittelt nach DIN 53 457.

Beispiel 18

Deckschicht für einen Sportplatzbelag

Herstellung des Einkomponenten-PU-Systems 100 Gew.-Teile des Polyurethan-prepolymeren nach Beispiel 2,
7,8 Gew.-Teile des Dialdimins nach Beispiel 7,
5 Gew.-Teile einer 10 gew.%igen Lösung von Benzoesäure in Di-(methylglykol)-phthalat,
15 Gew.-Teile einer Farbpaste aus Eisenoxidpigment in Di-octyl-phthalat,
15 Gew.-Teile Xylol und
70 Gew.-Teile eines Polyethylen-polypropylenkautschukgranulates mit einer durchschnittlichen Teilchengröße von 1 bis 3 mm.

wurden bei Raumtemperatur intensiv gemischt und in einer Menge von 800 g/m² auf den Sportplatzbelag aufgespritzt.

Die Deckschicht war bei 70 % relativer Luftfeuchtigkeit und bei 10°C nach 2 Stunden klebfrei und nach 3 Stunden begehbar.

## Ansprüche

1. Feuchtigkeitshärtendes, lagerstabiles Einkomponenten-Polyurethan-System, enthaltend

A) ein Polyurethan-Prepolymer mit einem NCO-Gehalt von 1 bis 10 Gew.%, hergestellt durch Umsetzung von höhermolekularen Polyolen und aromatischen Polyisocyanaten,

B) mindestens ein Polyaldimin mit der Formel

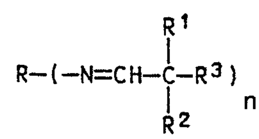

und/oder

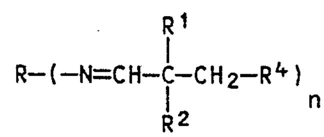

in denen bedeuten:
R einen linearen oder verzweigten, mehrwertigen Kohlenwasserstoffrest mit 2 bis 16 Kohlenstoffatomen, der gegebenenfalls gegenüber NCO-Gruppen inerte Substituenten gebunden besitzen kann,
einen linearen oder verzweigten, mehrwertigen, Oxigruppen als Brückenglieder gebunden enthaltenden Kohlenwasserstoffrest mit 4 bis 16 Kohlenstoffatomen der gegebenenfalls gegenüber NCO-Gruppen inerte Substituenten gebunden besitzen kann, einen Cycloalkylenrest mit 6 bis 20 Kohlenstoffatomen, der gegebenenfalls Alkylengruppen mit 1 bis 3 C-Atomen, Sulfonyl-, Thio-und/oder Oxigruppe als Brückenglieder und/oder gegenüber NCO-Gruppen inerte Substituenten gebunden besitzen kann, oder einen mehrwertigen Polyoxyalkylenrest mit den Strukturformeln

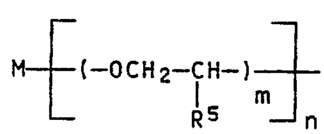

und/oder
$-CH_2-CH_2-CH_2-CH_2-(-O-CH_2-CH_2-CH_2-CH_2-)_{\overline{m}}$ ,
in denen M der hydroxylgruppenfreie Rest eines Startermoleküls, $R^5$ ein Wasserstoffatom, eine Methyl- und/oder Ethylgruppe und m eine ganze Zahl von 1 bis 25 sind,

$R^1$ und $R^2$ gleiche oder verschiedene , lineare oder verzweigte Alkylgruppen mit 1 bis 6 Kohlenstoffatomen oder eine Cycloalkylgruppe,

$R^3$ einen $OR^6$-, $-\overset{O}{\overset{\|}{C}}-OR^6$-oder $-O-\overset{O}{\overset{\|}{C}}-R^7$-Rest, wobei $R^6$ eine lineare oder verzweigte Alkylgruppe mit 1 bis 10 Kohlenstoffatomen oder eine Cycloalkylgruppe bedeutet und $R^7$ gleich $R^6$ ist oder einen linearen oder verzweigten Oxaalkylrest mit 1 bis 10 Kohlenstoffatomen bedeutet,

$R^4$ gleich $R^3$ oder $R^7$, ein Wasserstoffatom oder den Rest

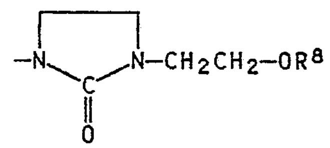

wobei $R^8$ gleich $R^6$, $-\overset{O}{\overset{\|}{C}}-NH-R^6$, $-\overset{O}{\overset{\|}{C}}-R^6$, $-\overset{O}{\overset{\|}{C}}-NH-R^9$,oder $-O-\overset{O}{\overset{\|}{C}}-R^9$-Rest, und $R^9$ ein aromatischer Rest mit 6 bis 15 Kohlenstoffatomen, der gegebenenfalls gegenüber NCO-Gruppen inerte Substituenten gebunden besitzen kann, sind und

n eine ganze Zahl von 2 bis 8, und

C) gegebenenfalls eine aromatische und/oder aliphatische Carbonsäure oder Arylsulfonsäure sowie

D) gegebenenfalls Hilfsmittel und/oder Zusatzstoffe.

2. Feuchtigkeitshärtendes, lagerstabiles Einkomponenten-Polyurethan-System nach Anspruch 1, dadurch gekennzeichnet, daß die Polyurethan-prepolymeren hergestellt werden durch Umsetzung von di-und/oder trifunktionellen Polyester-und/oder Polyether-polyolen mit Molekulargewichten von 500 bis 8000 und aromatischen Polyisocyanaten.

3. Feuchtigkeitshärtendes, lagerstabiles Einkomponenten-Polyurethan-System nach den Ansprüchen 1 und 2, dadurch gekennzeichnet, daß zur Herstellung der Prepolymeren als aromatisches Polyisocyanat verwendet wird 4,4'-Diphenylmethan-diisocyanat oder eine Mischung aus mindestens 50 Gew.% 4,4'-Diphenylmethan-diisocyanat, 0 bis 50 Gew.% 2,4'-Diphenylmethan-diisocyanat und/oder 0 bis 30 Gew.% Polyphenyl-polymethylen-polyisocyanat, so daß die Summe der Komponenten 100 Gew.% ergibt.

4. Feuchtigkeitshärtendes, lagerstabiles Einkomponenten-Polyurethan-System nach Anspruch 1, enthaltend pro NCO-Gruppe der Polyurethan-Prepolymeren (A) 0,2 bis 1,3 Äquivalente -N=CH-Gruppen der Polyaldimine (B).

5. Feuchtigkeitshärtendes, lagerstabiles Einkomponenten-Polyurethan-System nach Anspruch 1, enthaltend pro Äquivalent -N=CH-Gruppe der Polyaldimine (B) 0 bis 20 mval einer Carbonsäure oder Arylsulfonsäure.

6. Feuchtigkeitshärtendes, lagerstabiles Einkomponenten-Polyurethan-System nach Anspruch 1, enthaltend als Zusatzstoff 0 bis 10 Gew.% Malonsäurediethylester, bezogen auf das Gewicht des Polyurethan-Prepolymeren (A).

7. Feuchtigkeitshärtendes, lagerstabiles Einkomponenten-Polyurethan-System nach Anspruch 1, dadurch gekennzeichnet, daß zur Herstellung der Polyaldimine verwendet werden lineare oder verzweigte Alkylendiamine mit 4 bis 6 Kohlenstoffatomen, Cycloalkylendiamine der Formel

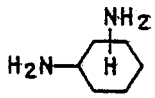 , 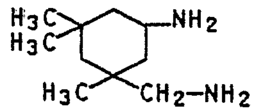 , 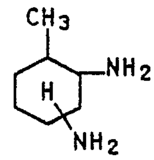 ,

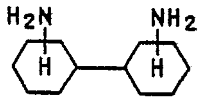 , 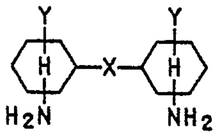 oder 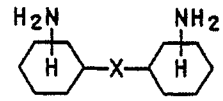 .

in der X ein $-CH_2-$, $-C(CH_3)_2-$, Brückenglied und Y eine Alkylgruppe mit 1 bis 4 Kohlenstoffatomen bedeuten oder di-und/oder trifunktionelle Polyoxyalkylen-polyamine mit Molekulargewichten von 110 bis 5000.

8. Feuchtigkeitshärtendes, lagerstabiles Einkomponenten-Polyurethan-System nach Anspruch 1, dadurch gekennzeichnet, daß man zur Herstellung der Polyaldimine 2,2-Dimethyl-propanal oder 2-Formylisobuttersäurealkylester mit 1 bis 4 Kohlenstoffatomen im Alkylrest,. vorzugsweise 2-Formylisobuttersäuremethylester verwendet.

9. Feuchtigkeitshärtendes, lagerstabiles Einkomponenten-Polyurethan-System nach Anspruch 1, dadurch gekennzeichnet, daß man zur Herstellung der Polyaldimine Aldehyde der Formel

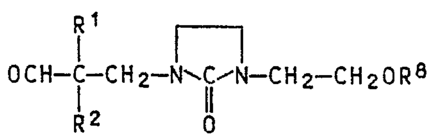

verwendet, in der $R^1$, $R^2$ und $R^8$ die obengenannte Bedeutung besitzen.

10. Verwendung der feuchtigkeitshärtenden, lagerstabilen Einkomponenten-Polyurethansysteme nach Anspruch 1 als Beschichtungs-, Überzugs-, Dichtungs-, Verguß-, Spachtel-und Verklebungsmassen.